# FASCICULE DE BREVET EUROPEEN

(11) **EP 1 895 630 B1**
(45) Date de publication et mention de la délivrance du brevet: **04.03.2009**
(21) Numéro de dépôt: 07290906.2
(22) Date de dépôt: 19.07.2007
(51) Int. Cl.: H02G 1/00

(54) **Gabarit de réalisation d'une ouverture dans une paroi**
Lehre zum Einbringen einer Öffnung in einer Wand
Template for producing an opening in a wall

(30) Priorité: 29.08.2006 FR 0607575
(43) Date de publication de la demande: 05.03.2008
(73) Titulaire: LEGRAND FRANCE, 87000 Limoges (FR); LEGRAND SNC, 87000 Limoges (FR)
(72) Inventeur: Guitard, Julien, 87000 Limoges (FR); Mendez, Pascal, 87170 Isle (FR); Vergne, Raphael, 87000 Limoges (FR)
(74) Mandataire: Orsini, Fabienne

(56) Documents cités:
- EP-A- 0 908 989
- DE-U1- 29 807 187
- DE-U1- 29 905 482
- US-A- 4 176 989

## Description

### DOMAINE TECHNIQUE AUQUEL SE RAPPORTE L'INVENTION

La présente invention concerne de manière générale la réalisation dans une paroi d'ouvertures d'accueil de boîtes d'encastrement électriques multipostes.

Elle concerne plus particulièrement un gabarit de réalisation d'une ouverture dans une paroi, se présentant sous la forme d'une plaque à disposer contre ladite paroi, cette plaque étant, d'une part, percée d'un orifice de positionnement, d'axe perpendiculaire au plan de la plaque, dont les dimensions sont sensiblement égales aux dimensions intérieures d'un orifice d'accueil en vis-à-vis duquel il est destiné à être placé, et, d'autre part, pourvue, à distance dudit orifice de positionnement, d'au moins un moyen de positionnement du centre d'un autre orifice d'accueil distinct dudit orifice d'accueil déjà réalisé, chaque moyen de positionnement, d'axe perpendiculaire au plan de la plaque, présentant une largeur inférieure à la largeur dudit orifice de positionnement, lesdites largeurs dudit moyen de positionnement et dudit orifice de positionnement étant considérées dans la même direction.

Avantageusement, un tel gabarit est utilisé pour réaliser des ouvertures oblongues dans des cloisons d'isolation rapportées sur les murs porteurs de constructions.

### ARRIERE-PLAN TECHNOLOGIQUE

Dans les constructions neuves les gaines électriques sont disposées sur les murs porteurs, puis ces murs porteurs sont recouverts de cloisons d'isolation.

Le plaquiste qui pose les cloisons d'isolation réalise à chaque endroit déterminé un orifice d'accueil qui transperce la cloison d'isolation et par lequel il tire les gaines électriques à l'extérieur de la cloison d'isolation.

L'installateur électrique qui intervient après le plaquiste peut alors réaliser à partir de chaque orifice d'accueil des ouvertures oblongues pour poser dans la paroi correspondante des boîtes d'encastrement électriques multipostes.

Pour réaliser ces ouvertures oblongues, il utilise un gabarit de pose tel que défini en introduction.

Dans de tels gabarits connus, l'orifice de positionnement présente un contour fermé.

Ainsi pour positionner l'orifice de positionnement du gabarit en regard de l'orifice d'accueil, l'installateur électrique doit tout d'abord enfilé au travers de l'orifice de positionnement les extrémités des gaines sortant par l'orifice d'accueil, puis il fait glisser le gabarit le long des gaines jusqu'à l'orifice d'accueil.

A l'aide du moyen de positionnement du gabarit, il marque sur ladite cloison d'isolation le centre de l'autre orifice d'accueil à réaliser.

Il retire alors le gabarit et perce la cloison d'isolation pour réaliser cet autre orifice d'accueil.

Enfin, à l'aide d'une règle à niveau, l'installateur électrique trace des lignes de découpage parallèles entre elles qui relient les bords des deux orifices d'accueil. Puis, il découpe la paroi selon ces lignes de découpage et forme ainsi l'ouverture oblongue.

La mise en place du gabarit sur la paroi à percer est une opération difficile à réaliser surtout lorsque les gaines émergent de ladite paroi sur une grande distance.

Par ailleurs, on connaît du document US 4176989, un gabarit d'aide à la réalisation de trous de cheville dans deux panneaux à assembler entre eux au moyen de chevilles. Ce gabarit se présente sous la forme d'une plaque à disposer contre un des panneaux à percer. Cette plaque comporte un orifice circulaire de guidage d'un foret de perçage et est pourvue d'une fente oblongue qui débouche sur un de ses côtés latéraux. La fente oblongue de ladite plaque présente une largeur constante égale au diamètre dudit orifice circulaire de guidage. Elle est adaptée à être engagée sur une cheville portée par la tranche du deuxième panneau à assembler, plaqué contre le premier panneau à percer, afin de fixer la position du gabarit par rapport au deuxième panneau avant d'ajuster par coulissement la position relative des deux panneaux pour placer l'orifice circulaire de guidage dudit gabarit à l'endroit souhaité sur le premier panneau à percer.

### OBJET DE L'INVENTION

Par rapport à l'état de la technique précité, l'invention propose un nouveau gabarit qui permet de simplifier la réalisation d'ouvertures oblongues d'accueil de boîtes d'encastrement électriques multipostes.

À cet effet, l'invention propose un gabarit tel que défini dans la revendication 1.

Grâce au gabarit selon l'invention, la mise place l'orifice de positionnement sur l'orifice d'accueil de la paroi est simplifiée car, lors de cette mise en place, l'installateur électrique introduit les gaines qui émergent de l'orifice d'accueil dans l'ouverture latérale de l'orifice de positionnement du gabarit qui chevauche lesdites gaines.

L'étape préalable d'enfilage des gaines au travers de l'orifice de positionnement du gabarit est donc supprimée.

Selon une première caractéristique avantageuse de l'invention, ladite plaque est fendue dans sa longueur de deux fentes parallèles qui s'étendent à partir du bord dudit orifice de positionnement tangentiellement à celui-ci.

Grâce aux fentes longitudinales du gabarit selon l'invention, l'installateur électrique peut introduire une lame coupe au travers des fentes du gabarit en appui sur la paroi, et découper ladite paroi en faisant glisser une lame coupante le long desdites fentes. L'installateur électrique réalise ainsi la découpe de la partie rectiligne de l'ouverture oblongue à réaliser.

Il n'est donc pas besoin, contrairement à l'état de la technique, de tracer de traits reliant les cercles des deux orifices d'accueil avant de procéder à la découpe de la cloison d'isolation. La réalisation de l'ouverture oblongue est ainsi simplifiée et plus précise.

D'autres caractéristiques avantageuses et non limitatives du gabarit selon l'invention sont définies dans les revendications 3 à 11.

### DESCRIPTION DETAILLEE D'UN EXEMPLE DE REALISATION

La description qui va suivre en regard des dessins annexés d'un mode de réalisation, donné à titre d'exemple non limitatif, fera bien comprendre en quoi consiste l'invention et comment elle peut être réalisée.

Dans les dessins annexés :
- la figure 1 est une vue de dessus d'un gabarit selon l'invention ;
- la figure 2 est une vue de dessous du gabarit de la figure 1.

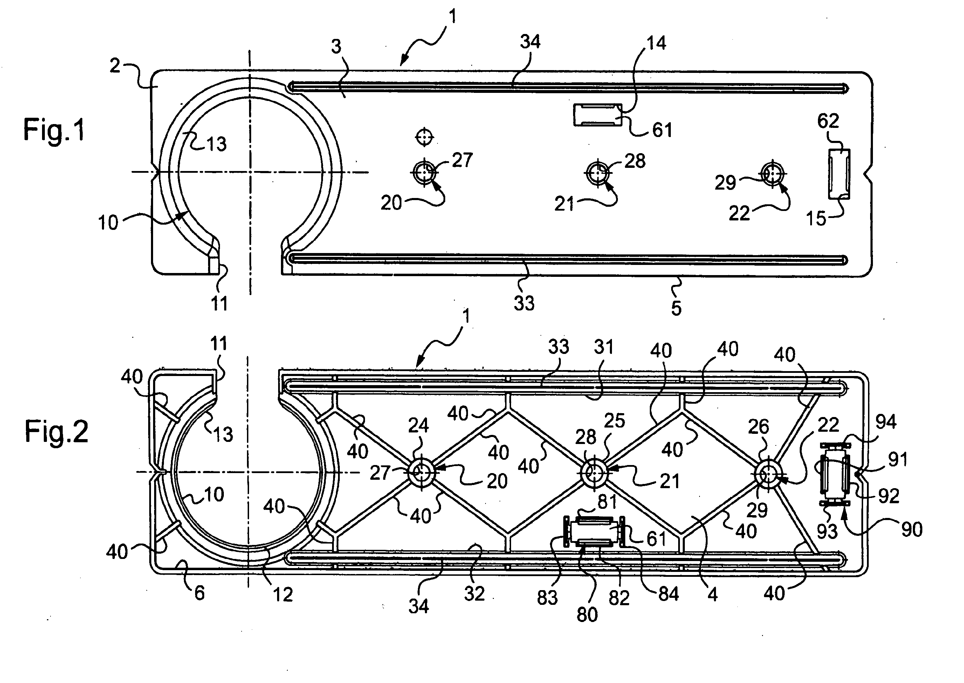

Sur les figures 1 et 2, on a représenté un gabarit 1 selon l'invention qui permet de réaliser une ouverture oblongue (non représentée) à partir d'un orifice d'accueil réaliser dans une paroi quelconque (non représentée), par exemple une cloison d'isolation.

Un telle ouverture oblongue est destinée à recevoir une boîte d'encastrement (non représentée) pour plusieurs postes d'appareillages électriques, dite boîte d'encastrement multipostes.

Le gabarit 1 se présente sous la forme d'une plaque 2, ici rectangulaire, délimitée par un bord 5 périphérique. La plaque 2 est de faible épaisseur. Elle présente une face avant 3 munie de repères de marquage ainsi qu'une face arrière 4 à disposer en regard de la paroi à percer.

Le gabarit 1 est réalisé d'une seule pièce par moulage d'une matière plastique de telle manière que la face arrière 4 de la plaque 2 est en creux par rapport la tranche libre du bord 5 qui forme une nervure 6 périphérique. La tranche libre du bord 5 définit le plan d'appui de la plaque 2 contre la paroi à percer.

La plaque 2 est percée d'un orifice de positionnement 10 d'axe perpendiculaire au plan de ladite plaque.

L'orifice de positionnement 10 est traversant et débouche sur les faces avant 3 et arrière 4 de la plaque 2.

Cet orifice de positionnement 10 est destiné à être placé en vis-à-vis de l'orifice d'accueil (non représenté) déjà réalisé à la scie cloche dans la paroi.

L'orifice de positionnement 10 présente des dimensions sensiblement égales aux dimensions intérieures de l'orifice d'accueil de la paroi en vis-à-vis duquel il est destiné à être placé.

Ici, l'orifice de positionnement 10 est circulaire et son diamètre est sensiblement égal au diamètre dudit orifice d'accueil.

Bien entendu, selon des variantes non représentées, on pourrait prévoir que l'orifice de positionnement présente une forme oblongue, carrée ou rectangulaire.

L'orifice de positionnement 10 est bordé d'une paroi 13 qui s'étend en saillie de la face arrière 4 de la plaque 2 et dont une partie 12 est destinée à s'enfoncer dans l'orifice d'accueil.

Cette paroi 13 est sensiblement conique, le plus petit diamètre du cercle du cône étant situé du côté de la face arrière 4 de la plaque 2.

La partie 12 de la paroi 13 qui s'enfonce dans l'orifice d'accueil prend appui contre la paroi de celui-ci pour stabiliser la position du gabarit 1 sur la paroi.

Selon une caractéristique particulièrement avantageuse du gabarit 1, l'orifice de positionnement 10 comporte dans son bord une ouverture latérale 11 qui débouche vers l'extérieur sur un grand côté du bord 5 périphérique de la plaque 2.

On pourrait également prévoir que l'ouverture latérale 11 dudit orifice de positionnement 10 débouche sur un petit côté du bord 5 de la plaque 2.

Cette ouverture latérale 11 présente une largeur qui est inférieure à la largeur dudit orifice de positionnement 10, lesdites largeurs de l'ouverture latérale 11 et de l'orifice de positionnement 10 étant considérées dans la même direction.

Ainsi, ici, la largeur de l'ouverture latérale 11 est inférieure au diamètre de l'orifice de positionnement 10.

Cependant, selon d'autres variantes non représentées, la largeur de l'orifice de positionnement considérée, par rapport à laquelle se détermine la largeur de l'ouverture latérale, dépendra de la position de ladite ouverture latérale sur le bord de l'orifice de positionnement. Cette largeur de l'orifice de positionnement pourra être soit la longueur ou la largeur d'un rectangle, soit le côté d'un carré, soit encore le petit axe ou le grand axe d'une ellipse.

Bien entendu, la paroi 13 qui borde l'orifice de positionnement 10 est ouverte à partir de ladite ouverture latérale 11 sur toute sa hauteur jusqu'à son bord libre pour former un passage latéral. L'ouverture de la paroi 13 est suffisamment large pour permettre l'introduction de gaines électriques via ce passage latéral dans ledit orifice de positionnement 10.

La plaque 2 est également pourvue, à distance dudit orifice de positionnement 10, d'au moins un moyen de positionnement 20, 21, 22 du centre d'un autre orifice d'accueil distinct dudit orifice d'accueil déjà réalisé.

Ici la plaque 2 comporte plusieurs moyens de positionnement 20, 21, 22 du centre de plusieurs orifices d'accueil, répartis sur la longueur de la plaque 2 et séparés deux à deux d'une même distance normalisée ici égale à 71 mm.

Chaque moyen de positionnement 20,21,22, d'axe perpendiculaire au plan de la plaque 2, présente une largeur inférieure à la largeur dudit orifice de positionnement 10, lesdites largeurs dudit moyen de positionnement et dudit orifice de positionnement étant considérées dans la même direction.

Ici, le diamètre de chaque moyen de positionnement 20,21,22 est très inférieur au diamètre de l'orifice de positionnement 10 circulaire.

Selon l'exemple représenté, les moyens de positionnement comprennent trois orifices traversants 20, 21, 22 de faible diamètre. Chaque orifice traversant 20, 21, 22 permet le passage d'une pointe de marquage pour marquer ladite paroi du centre de l'orifice d'accueil à réaliser.

Les centres de ces orifices traversants 20,21, 22 et le centre de l'orifice de positionnement 10 sont alignés le long de la plaque 2 et séparés deux à deux de 71 mm.

Du côté de la face arrière 4 les orifices traversants 20, 21, 22 de positionnement sont bordés par des manchons cylindriques 24, 25, 26 qui s'étendent jusqu'au plan d'appui de la plaque 2. Les faces intérieures 27, 28, 29 de ces manchons cylindriques permettent de guider la pointe de marquage introduite dans les orifices traversants 20, 21, 22, comme expliqué ci-dessus.

Selon une variante non représentée, on pourrait prévoir que chaque moyen de positionnement comprend une pointe pleine prévue en saillie de la face arrière 4 de ladite plaque 2. Chaque pointe permettrait le marquage de la position du centre de l'autre orifice d'accueil à réaliser sur la paroi considérée.

Avantageusement, la plaque 2 est fendue dans sa longueur de deux fentes 33, 34 parallèles qui s'étendent à partir du bord dudit orifice de positionnement 10 tangentiellement à celui-ci. Lesdites fentes 33,34 longitudinales sont espacées l'une de l'autre d'une distance égale à environ la largeur ou le diamètre dudit orifice de positionnement 10.

Elles s'étendent longitudinalement au moins jusqu'à hauteur de l'orifice traversant 22 le plus éloigné de l'orifice de positionnement 20. Ces fentes 33, 34 s'étendent ici sur la quasi-totalité de la longueur de la plaque 2, selon une direction parallèle à l'axe passant par les centres de l'orifice de positionnement 10 et des orifices traversants 20, 21, 22.

Ces fentes 33, 34 forment ainsi des lumières et sont de largeur suffisante pour laisser passer, par exemple, une lame de scie.

Du côté de la face arrière 4 il est prévu des nervures 31, 32 traversées par lesdites fentes 33,34.

Enfin, comme représenté sur la figure 2, il est prévu des nervures de renfort 40 disposées en croisillons sur la face arrière 4 de la plaque 2 du gabarit 1 pour assurer la rigidité de ladite plaque 2. Ces nervures de renfort 40 relient entre eux les manchons cylindriques bordant les orifices traversants 20,21, 22, la paroi 13 bordant l'orifice de positionnement 10, les nervures 31, 32 bordant les fentes 33,34 et la nervure 6 formée par le bord 5 de la plaque 2.

Il est également prévu dans la plaque 2 du gabarit 1 deux ouvertures rectilignes 14, 15, orientées respectivement horizontalement et verticalement, qui traversent les faces avant 3 et arrière 4. Ces ouvertures rectilignes 14, 15 logent des niveaux à bulle 61, 62 maintenus sur la plaque 2 par des moyens de maintien 80, 90. Ici, ces ouvertures sont chacune bordées en face arrière de quatre parois de maintien 81, 82, 83,84 et 91, 92, 93, 94. Ces parois de maintien délimitent les logements des niveaux à bulle 61, 62. Deux parois de maintien 81,82, et 91,92 de chaque logement comporte une dent à leur extrémité libre pour maintenir par serrage ou par coincement les niveaux à bulle 61,62 dans leur logement.

On va décrire ci-après la réalisation dans une cloison d'isolation d'une ouverture oblongue pour une boîte d'encastrement multipostes à l'aide du gabarit 1.

Cette ouverture oblongue est réalisée à partir d'un orifice d'accueil circulaire qu'un plaquiste a percé dans la cloison d'isolation.

Des gaines (non représentées) qui ont été positionnées entre le mur porteur (non représenté) et la cloison d'isolation sont tirées vers l'extérieur de la cloison d'isolation au travers de l'orifice d'accueil.

L'installateur électrique positionne le gabarit 1 contre la cloison d'isolation de sorte que les gaines électriques qui émergent de l'orifice d'accueil s'engagent via ladite ouverture latérale 11 dans l'orifice de positionnement 10 du gabarit 1 qui chevauche alors lesdites gaines.

L'orifice de positionnement 10 est mis en regard dudit orifice d'accueil, ladite paroi 13 qui borde ledit orifice de positionnement 10 s'engageant partiellement dans celui-ci.

Le gabarit 1 est orienté horizontalement ou verticalement suivant la direction souhaitée de pose de la boîte d'encastrement. Pour l'orientation du gabarit 1, l'installateur électrique utilise le niveau à bulle horizontal 61 ou le niveau à bulle vertical 62 correspondant.

Puis, l'installateur électrique réalise une marque sur la cloison d'isolation en faisant passer, par exemple, une pointe marquante au travers d'un des orifices traversants 20, 21, 22 pour repérer le centre d'autre orifice d'accueil distinct du premier. Le choix de l'orifice traversant dépend de la longueur souhaitée pour l'ouverture oblongue. Le premier orifice traversant 20 situé au plus près du centre de l'orifice de positionnement 10 du gabarit 1 permet la réalisation d'une ouverture oblongue pour une boîte d'encastrement à deux postes, le deuxième orifice traversant 21 située au centre permet la réalisation d'une ouverture oblongue pour une boîte d'encastrement à trois postes et le troisième orifice traversant 22 le plus éloigné du centre dudit orifice de positionnement 10 permet la réalisation d'une ouverture oblongue pour une boîte d'encastrement à quatre postes.

Le gabarit 1 restant en appui contre la cloison d'isolation, l'installateur électrique fait également passer une lame de scie, ou encore une lame de découpage, dans chacune des fentes 33, 34. Il découpe la cloison d'isolation en faisant glisser la lame le long de chacune des fentes 33, 34 en partant de l'extrémité de chaque fente 33, 34 située du côté de l'orifice de positionnement 10, jusqu'à arriver au niveau de l'orifice de traversant 20, 21, 22 choisi.

Du fait de l'appui du gabarit sur la cloison d'isolation, les nervures 31,32 des fentes 33,34 affleurent ou sont en contact avec la cloison d'isolation, ce qui permet de guider précisément la lame lors du découpage de la cloison d'isolation le long des fentes 33, 34.

Les bords rectilignes de l'ouverture oblongue à réaliser sont ainsi découpés.

Le gabarit 1 est alors retiré de la cloison d'isolation et l'installateur électrique réalise l'autre orifice d'accueil dont il a marqué le centre sur la cloison d'isolation en utilisant par exemple une scie cloche centrée sur la marque réalisée. La réalisation de l'autre orifice d'accueil permet d'évacuer la matière de la cloison d'isolation située entre les bords rectilignes découpés.

La présente invention n'est nullement limitée au mode de réalisation décrit et représenté, mais l'homme du métier saura y apporter toute variante dans les limitations des revendications annexeés.

## Revendications

1. Gabarit (1) de réalisation d'une ouverture dans une paroi, se présentant sous la forme d'une plaque (2) à disposer contre ladite paroi, cette plaque (2) étant, d'une part, percée d'un orifice de positionnement (10) d'axe perpendiculaire au plan de la plaque, dont les dimensions sont sensiblement égales aux dimensions intérieures d'un orifice d'accueil en vis-à-vis duquel il est destiné à être placé, et, d'autre part, pourvue, à distance dudit orifice de positionnement (10), d'au moins un moyen de positionnement (20, 21, 22) du centre d'un autre orifice d'accueil distinct dudit orifice d'accueil déjà réalisé, chaque moyen de positionnement (20,21,22), d'axe perpendiculaire au plan de la plaque, présentant une largeur inférieure à la largeur dudit orifice de positionnement (10), lesdites largeurs dudit moyen de positionnement et dudit orifice de positionnement étant considérées dans la même direction, ledit orifice de positionnement (10) comportant dans son bord une ouverture latérale (11) qui débouche sur un bord (5) de ladite plaque (2), **caractérisé en ce que** cette ouverture latérale présentant une largeur inférieure à la largeur dudit orifice de positionnement considérée dans la même direction.

2. Gabarit (1) selon la revendication précédente, **caractérisé en ce que** ladite plaque (2) est fendue dans sa longueur de deux fentes (33, 34) parallèles qui s'étendent à partir du bord dudit orifice de positionnement (10) tangentiellement à celui-ci.

3. Gabarit (1) selon la revendication précédente, **caractérisé en ce que** les fentes s'étendent longitudinalement au moins jusqu'à hauteur dudit moyen de positionnement (20, 21, 22) du centre de l'autre orifice d'accueil.

4. Gabarit (1) selon l'une des revendications 2 et 3, **caractérisé en ce que** lesdites fentes (33,34) longitudinales sont espacées l'une de l'autre d'une distance égale à environ la largeur ou le diamètre dudit orifice de positionnement (10).

5. Gabarit (1) selon l'une des revendications précédentes, **caractérisé en ce qu'**il comporte plusieurs moyens de positionnement (20, 21, 22) du centre de plusieurs orifices d'accueil, répartis sur la longueur de la plaque (2) et séparés deux à deux d'une même distance normalisée.

6. Gabarit (1) selon l'une des revendications précédentes, **caractérisé en ce que** chaque moyen de positionnement (20, 21, 22) comprend un orifice traversant (20, 21, 22) de faible diamètre pour le passage d'une pointe de marquage de ladite paroi.

7. Gabarit selon l'une des revendications 1 à 5, **caractérisé en ce que** chaque moyen de positionnement comprend une pointe pleine prévue en saillie de la face arrière de ladite plaque.

8. Gabarit (1) selon l'une des revendications précédentes, **caractérisé en ce que** ledit orifice de positionnement (10) est bordé d'une paroi (13) qui s'étend en saillie de la face arrière (4) de la plaque (2) et qui est destinée à s'enfoncer en partie dans ledit orifice d'accueil réalisé dans la paroi.

9. Gabarit (1) selon l'une des revendications précédentes, **caractérisé en ce que** la paroi (13) de l'orifice de positionnement (10) est sensiblement conique.

10. Gabarit (1) selon l'une des revendications précédentes, **caractérisé en ce que** ledit orifice de positionnement (10) est un orifice circulaire dont le diamètre est sensiblement égal au diamètre de l'orifice d'accueil en vis-à-vis duquel il est destiné à être placé, la largeur de ladite ouverture latérale étant inférieure au diamètre de l'orifice de positionnement.

11. Gabarit (1) selon l'une quelconque des revendications précédentes, **caractérisé en ce qu'**il est réalisé d'une seule pièce par moulage d'une matière plastique.

## Claims

1. A template (1) for making an opening in a wall, the template being in the form of a plate (2) for placing against said wall, the plate (2) being firstly pierced by a positioning orifice (10) of axis perpendicular to the plane of the plate, and of dimensions that are substantially equal to the inside dimensions of a receiver orifice in register with which it is to be placed, and being secondly provided at a distance from said positioning orifice (10) with at least one positioning means (20, 21, 22) for positioning the center of another receiver orifice distinct from said already-made receiver orifice, each positioning means (20, 21, 22) of axis perpendicular to the plane of the plate presenting a width that is less than the width of said positioning orifice (10), said widths of said positioning means and of said positioning orifice being measured in the same direction, said positioning orifice (10) including in its edge a lateral opening (11) that opens out through an edge (5) of said plate (2), the template being **characterized in that** said lateral opening presents a width that is less than the width of said positioning orifice measured in the same direction.

2. A template (1) according to the preceding claim, **characterized in that** said plate (2) is slotted lengthwise by two parallel slots (33, 34) that extend from the edge of said positioning orifice (10), tangentially therefrom.

3. A template (1) according to the preceding claim, **characterized in that** the slots extend longitudinally at least as far as said positioning means (20, 21, 22) for positioning the center of the other receiver orifice.

4. A template (1) according to claim 2 or claim 3, **characterized in that** said longitudinal slots (33, 34) are spaced apart from each other by a distance equal to about the width or the diameter of said positioning orifice (10).

5. A template (1) according to any preceding claim, **characterized in that** it includes a plurality of positioning means (20, 21, 22) for positioning the centers of a plurality of receiver orifices that are distributed along the length of the plate (2) and that are separated from one another in pairs by a common standardized distance.

6. A template (1) according to any preceding claim, **characterized in that** each positioning means (20, 21, 22) comprises a through orifice (20, 21, 22) of small diameter for passing a spike for marking said wall.

7. A template according to any one of claims 1 to 5, **characterized in that** each positioning means comprises a solid spike projecting from the rear face of said plate.

8. A template (1) according to any preceding claim, **characterized in that** said positioning orifice (10) is surrounded by a wall (13) that projects from the rear face (4) of the plate (2) for the purpose of penetrating in part into said receiver orifice formed in the wall.

9. A template (1) according to any preceding claim, **characterized in that** the wall (13) of the positioning orifice (10) is substantially conical.

10. A template (1) according to any preceding claim, **characterized in that** said positioning orifice (10) is a circular orifice of diameter substantially equal to the diameter of the receiver orifice in register with which it is to be placed, the width of said lateral opening being less than the diameter of the positioning orifice.

11. A template (1) according to any preceding claim, **characterized in that** it is made as a single piece by molding a plastics material.

## Patentansprüche

1. Lehre (1) zur Herstellung einer Öffnung in einer Wand, die in Form einer an der Wand anzuordnenden Platte (2) vorliegt, wobei diese Platte (2) einerseits mit einem Positionierdurchbruch (10) mit einer senkrecht zur Plattenebene verlaufenden Achse, dessen Abmessungen im Wesentlichen gleich den Innenabmessungen eines Aufnahmedurchbruchs sind, dem gegenüber er zum Anbringen bestimmt ist, und andererseits in einem Abstand von dem Positionierdurchbruch (10) mit mindestens einem Mittel (20, 21, 22) zur Positionierung der Mitte eines anderen, von dem bereits hergestellten verschiedenen Aufnahmedurchbruchs versehen ist, wobei jedes eine senkrecht zur Ebene der Platte verlaufende Achse aufweisende Positioniermittel (20, 21, 22) eine Breite aufweist, die kleiner ist als die Breite des Positionierdurchbruchs (10), wobei die Breite des Positioniermittels und die des Positionierdurchbruchs in der gleichen Richtung betrachtet werden, wobei der Positionierdurchbruch (10) in seinem Rand eine seitliche Öffnung (11) aufweist, die an einem Rand (5) der Platte (2) mündet, **dadurch gekennzeichnet, dass** diese seitliche Öffnung eine Breite aufweist, die kleiner ist als die in der gleichen Richtung betrachtete Breite des Positionierdurchbruchs.

2. Lehre (1) nach dem vorhergehenden Anspruch, **dadurch gekennzeichnet, dass** die Platte (2) in ihrer Länge mit zwei parallelen Schlitzen (33, 34) versehen ist, die sich von dem Rand des Positionierdurchbruchs (10) tangential dazu erstrecken.

3. Lehre (1) nach dem vorhergehenden Anspruch, **dadurch gekennzeichnet, dass** sich die Schlitze in Längsrichtung zumindest bis zur Höhe des Mittels (20, 21, 22) zur Positionierung der Mitte des anderen Aufnahmedurchbruchs erstrecken.

4. Lehre (1) nach Anspruch 2 oder 3, **dadurch gekennzeichnet, dass** die Längsschlitze (33, 34) in einem Abstand voneinander angeordnet sind, der ungefähr gleich der Breite oder des Durchmessers des Positionierdurchbruchs (10) ist.

5. Lehre (1) nach einem der vorhergehenden Ansprüche, **dadurch gekennzeichnet, dass** sie mehrere Mittel (20, 21, 22) zur Positionierung der Mitte von mehreren Aufnahmedurchbrüchen aufweist, die über die Länge der Platte (2) verteilt und paarweise mit einem gleichen genormten Abstand voneinander getrennt sind.

6. Lehre (1) nach einem der vorhergehenden Ansprüche, **dadurch gekennzeichnet, dass** jedes Positioniermittel (20, 21, 22) einen Querdurchbruch (20, 21, 22) mit einem kleinen Durchmesser für das Passieren einer Markierspitze der Wand aufweist.

7. Lehre nach einem der Ansprüche 1 bis 5, **dadurch gekennzeichnet, dass** jedes Positioniermittel eine Vollspitze aufweist, die von der Rückseite der Platte vorragend vorgesehen ist.

8. Lehre (1) nach einem der vorhergehenden Ansprüche, **dadurch gekennzeichnet, dass** der Positionierdurchbruch (10) von einer Wand (13) begrenzt wird, die sich von der Rückseite (4) der Platte (2) vorragend erstreckt und teilweise in den in der Wand ausgebildeten Aufnahmedurchbruch eindringen soll.

9. Lehre (1) nach einem der vorhergehenden Ansprüche, **dadurch gekennzeichnet, dass** die Wand (13) des Positionierdurchbruchs (10) im Wesentlichen konisch ist.

10. Lehre (1) nach einem der vorhergehenden Ansprüche, **dadurch gekennzeichnet, dass** der Positionierdurchbruch (10) ein kreisförmiger Durchbruch ist, dessen Durchmesser im Wesentlichen gleich dem Durchmesser des Aufnahmedurchbruchs ist, dem gegenüber er platziert werden soll, wobei die Breite der seitlichen Öffnung kleiner ist als der Durchmesser des Positionierdurchbruchs.

11. Lehre (1) nach einem der vorhergehenden Ansprüche, **dadurch gekennzeichnet, dass** sie durch Formen aus einem Kunststoffmaterial einstückig hergestellt ist.
